# EUROPEAN PATENT SPECIFICATION

(11) **EP 4 594 734 B1**
(45) Date of publication and mention of the grant of the patent: **07.10.2026**
(21) Application number: 23772337.4
(22) Date of filing: 29.08.2023
(51) Int. Cl.: G01N 21/45, G01N 21/77

(54) **SELECTIVE GAS SENSOR**
SELEKTIVER GASSENSOR
CAPTEUR DE GAZ SÉLECTIF

(30) Priority: 30.09.2022 LV 220079
(43) Date of publication of application: 06.08.2025
(73) Proprietor: Latvijas Universitates Cietvielu fizikas instituts, 1063 Riga (LV)
(72) Inventor: BUNDULIS, Arturs, 1058 Riga (LV); MOZOLEVSKIS, Gatis, 1009 Riga (LV); LETKO, Edvins, LV 3008 Jelgava (LV); BENDINS, Aleksejs, 1034 Riga (LV)
(74) Representative: Fortuna, Jevgenijs
(86) International application number: PCT/LV2023/050013
(87) International publication number: WO 2024/072198

(56) References cited:
- WO-A1-2009/115847
- WO-A1-2021/152345
- US-A- 5 262 842
- TATEVIK CHALYAN ET AL: "Asymmetric Mach-Zehnder Interferometer Based Biosensors for Aflatoxin M1 Detection", BIOSENSORS, vol. 6, no. 1, 6 January 2016 (2016-01-06), pages 1, XP055693571, DOI: 10.3390/bios6010001

## Description

### Technical Field

The present invention relates to a sensor for detecting the presence of ammonia gas and/or ammonia vapor and a manufacturing method for said sensor.

### Background Art

Ammonia (NH₃) is a colourless caustic and hazardous gas and can seriously damage the skin, eyes, and respiratory system of anyone that comes in contact with it. Ammonia is a natural by-product of manure, making its monitoring critical in poultry farms and livestock farms, to ensure an optimal environment for animals and people working with them. As ammonia is highly corrosive and hazardous it is challenging to design sensors with a lifespan longer than one year.

This is especially potent for the poultry sector where one cycle can last for 52 weeks, which sets the minimum necessary sensor lifespan. During this time, the sensors are used to monitor ammonia levels to see if they are within allowed limits, meaning that they are exposed to ammonia the entire cycle time. This puts longevity as the main issue of ammonia sensors.

Currently, most ammonia detectors are based on electrochemical sensors. While this method gives a reliable signal and moderate lifespan (around one year), sensor degradation and high-cost leave the room for improvement [1]. Other alternatives include Photoionization Detectors (PID), which are quite robust to ammonia degradation, but are relatively expensive [2].

There is known alternative to the previously mentioned sensors - an all-optical sensor based on an asymmetrical Mach-Zehnder Interferometer (MZI) [3, 15, 16, 17]. This sensor is based on organic materials that are robust to ammonia and cheap.

The information of the known types of gas sensor technologies is summarized in the table1.

**Table 1. Summary of gas sensor technologies.**

| Method/alternative | Advantages | Disadvantages |
|---|---|---|
| Photoionization Detectors (PID) | (a) Excellent separation performance; (b)High sensitivity and selectivity. | a) High-cost |
| | | b) Devices are more applicable for high sensitivity cases |
| Gas Sensitive Semiconductors (GSS) | (a)Low cost; (b)Short response time; (c)Wide range of target gases; (d)Long lifetime. | a) Relatively low sensitivity and selectivity; (b)Sensitive to environmental factors; (c)High energy consumption. (d)Sensitive to Ammonia degradation |
| Pellistors (Calorimetric Methods) | a) Stable at ambient temperature; (b)Low cost; (c)Adequate sensitivity for industrial detection (ppth range) | a) Risk of catalyst poisoning and explosion; (b)Intrinsic deficiencies in selectivity. |
| Infra-red detectors | (a)High sensitivity, selectivity, and stability; (b)Long lifetime; (c)Insensitive to environmental change. | (a) Difficulty in miniaturization; (b)High cost. |

From a device manufacturing point of view, devices based on optical absorption or refractive index changes are simple to implement. For devices employing absorption technology, the biggest issue is light sources. Many gases have strong absorption in the mid-infrared spectrum. However, for this spectral region, most of the lights have low output power and need cooling systems. Regarding waveguide devices, the design can be tuned to work for different light sources [3]. The use of interference as a detection method also enhances the sensitivity as this allows the detection of small changes in the refractive index of cladding material. Due to this, detection through refractive index changes is probably the best choice.

Regarding devices employing refractive index changes, the Mach-Zehnder interferometer (MZI) is not the only design type applicable for such a detection method. Device designs employing a similar detection method have been reported using whispering gallery mode resonators [4; 5], plasmonic devices [6, 7, 8], Fabry-Perot [9] interferometers as well as hollow core fibres [10].

Compared to the whispering gallery mode approach, MZI has lower demands for the fabrication process, as it is necessary to place the resonant structure close enough to the waveguide to ensure efficient coupling between the waveguide and the resonator. In case of inefficient coupling, the sensitivity of the device will drastically decrease.

Most of the plasmonic devices employ some type of metallic nanoparticles or metallic layers, again complicating their manufacturing.

While Fabry-Perot gas sensors are similar to the proposed technology as it also employs porous polymer as gas sensitive medium, examples present in literature use deformation and not refractive index changes due to gas absorption as well as optical fibres for light guiding, meaning that the device does not have an integrated light guiding elements. While for signal sensors this might not be an essential problem, as optical fibres are widely used for optical signal coupling into optical devices, when scaling systems to multiple sensors on a single chip, more complicated fibres for light coupling into the device would be necessary.

Lastly, hollow core fibre gas sensors typically are quite large with fibre/gas interaction length reaching an order of meters. While these types of sensors are precise, they are limited by their interaction length and cannot be made small and portable.

In summary, compared to other gas sensors employing refractive index changes, the most important advantage of the design as per present invention, is its relatively simple manufacturing. Most of the commercially available devices now are either based on gas-sensitive semiconductors (GSS) [11; 13], or photoionization detectors (PID) [12; 14], which are mainly based on gas detection through electrical signals, making optical sensors unique in the modern gas sensor market.

### Disclosure of the Invention

The goal of the invention is to provide an effective sensor for detecting the presence of ammonia gas and/or ammonia vapor in the environment, which would solve disadvantages of the prior art solutions.

The set goal is reached by providing a selective gas sensor, as defined with appended independent claim 1, comprising a light source, a sensor chip and a light detector; the sensor chip having an optical input and an optical output, where the light source is optically connected with the optical input of the sensor chip; the optical output of the sensor chip is optically connected with the optical input of the light detector with ability to guide a light from the light source output to the optical input of the light detector; wherein the sensor chip comprises a substrate, an asymmetric Mach-Zehnder interferometer, comprising multiple asymmetrical Mach-Zehnder interferometer structures optically connected in parallel, each having different pores size of the polymer cladding and has multiple outputs that correspond to each of the Mach-Zehnder interferometer structures outputs; wherein the pore sizes of each polymer cladding differ by 0.02 nm to 0.1 nm. According to one embodiment, the polymer cladding one has pores size from 0.23 nm to 0.35 nm; the polymer cladding two has pores size from 0.18 nm to 0.25 nm; the polymer cladding three has pores size from 0.13 nm to 0.2 nm; the polymer cladding four has pores size from 0.08 nm to 0.15 nm.

The set goal is also reached by providing a method for manufacturing of the sensor chip for the selective gas sensor, as defined with appended independent claim 5, comprising the following steps: (i) providing at least one substrate, comprising of a glass, a quartz, or a polymer film; (ii) depositing on the substrate at least one photoresist layer of epoxy-based negative photoresist; (iii) creation at least two optically connected in parallel Mach-Zehnder interferometer structures in the polymer layer; (iv) deposition of polymer claddings on each Mach-Zehnder interferometer structure; (v) thermal treatment of the polymer claddings selecting thermal treatment time and temperature to create the desired pores size of each polymer claddings to obtain different pores size of the polymer claddings on respective Mach-Zehnder interferometer structures. According to one embodiment, at the step (iii) at least four optically connected in parallel Mach-Zehnder interferometer structures are created in the polymer layer. According to particular embodiment, the thermal treatment of the polymer claddings at the step (v) is made by keeping first polymer cladding at the temperature from 60 to 75°C for 60 - 300 seconds; second polymer cladding at the temperature from 75 to 90°C for 60 - 300 seconds; third polymer cladding at the temperature from 90 to 105°C for 60 - 300 seconds; fourth polymer cladding at the temperature from 105 to 120°C for 60 - 300 seconds.

The set goal is also reached by use of the proposed sensor chip in selective gas sensor, as defined with claim 11.

### Short Description of Drawings

Figure 1 shows principal scheme of the device;
Figure 2 shows the structural scheme of one embodiment of the sensor chip;
Figure 3 schematically shows gas interaction with cladding layer and induced refractive index changes due to filling of pores of the cladding layer;
Figure 4 shows the manufacturing workflow;
Figure 5 shows the scheme of a test device;
Figure 6 shows an example of an experimental measurement of the proposed sensor signal, when exposed to 50 ppm ammonia in nitrogen;
Figure 7 shows the structural scheme of another embodiment of the sensor chip;
Figure 8 - shows an example of an experimental measurement of the proposed sensor signal, when exposed to Isopropanol vapours.

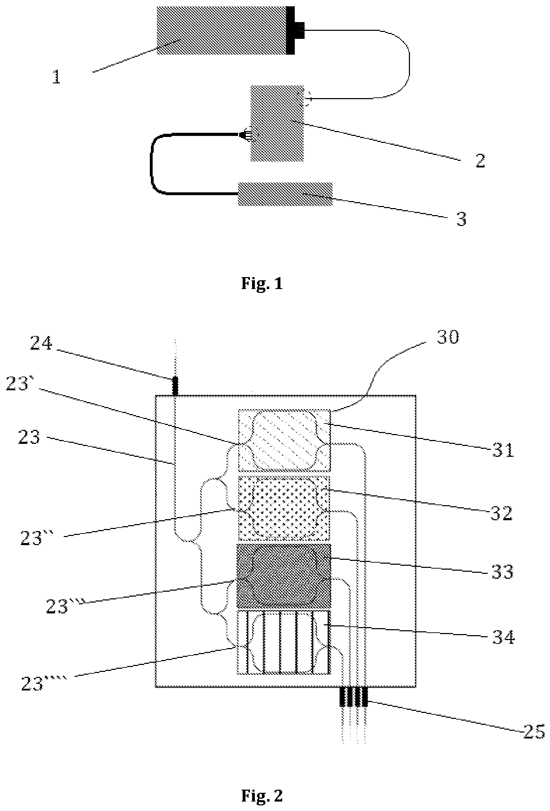

The proposed selective gas sensor (Fig. 1), comprises a light source (1), a sensor chip (2) and a light detector (3). The sensor chip (2) is designed to have an optical input (20) and an optical output (21), where the light source (1) is optically connected with the optical input (20) of the sensor chip (2). The optical output (21) of the sensor chip (2) is optically connected with the optical input of the light detector (3) with ability to guide a light from the light source (1) output, through the sensor chip (2), to the optical input of the light detector (3).

The sensor chip (2) comprises a substrate (22), an asymmetric Mach-Zehnder interferometer (23), having an input (24) and an output (25); and a cladding (30).

According to the invention, the substrate (22) can be a glass, or a quartz, or a polymer film.

The asymmetric Mach-Zehnder interferometer (23) comprises multiple asymmetrical Mach-Zehnder interferometer structures (23', 23", 23 ‴, 23ʺʺ) optically connected in parallel (Fig. 2), each having different pores size of the polymer cladding (31, 32, 33, 34) that covers both the reference arm and the measurement arm of each respective Mach-Zehnder interferometer and has multiple outputs that correspond to each of the Mach-Zehnder interferometer structures (23', 23", 23 "', 23ʺʺ) outputs. The pore sizes of each polymer cladding (31, 32, 33, 34) differ by 0.02 nm to 0.1 nm.

The cladding material may be a organic polymer, for instance, poly(methyl methacrylate), or polysulfon.

According to the preferred embodiment, the light source (1), the sensor chip (2), and the light detector (3) are optically connected with an optical fiber (40).

According to another embodiment, the sensor comprises at least four optically connected in parallel Mach-Zehnder interferometer structures (23', 23", 23 ‴, 23ʺʺ) - Fig. 2, which are created in the polymer layer and having different claddings (31, 32, 33, 34). In this embodiment, the polymer cladding one (31) has pores size from 0.23 nm to 0.35 nm; the polymer cladding two (32) has pores size from 0.18 nm to 0.25 nm; the polymer cladding three (33) has pores size from 0.13 nm to 0.2 nm; the polymer cladding four (34) has pores size from 0.08 nm to 0.15 nm.

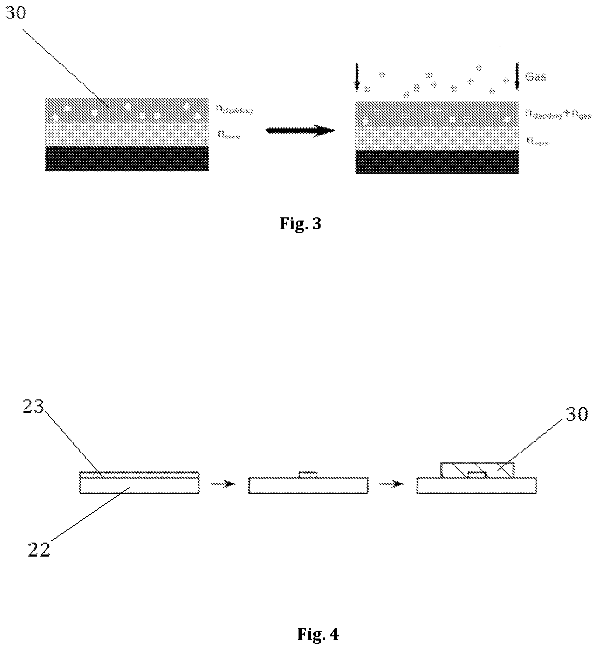

Due to external gas filling pores of cladding material, refractive index of cladding (30) changes (Fig. 3). As part of mode is dilated in to cladding (30), refractive index changes in this layer also influence the mode transmittance through device through change its phase. As the device is made asymmetric, there will be a phase difference between both interferometer arms, leading to changes in output intensity. By detecting these changes, external gas presence can be detected. For this purpose, the device needs to have single-mode waveguides at the working wavelength. This can be achieved through waveguide dimension tuning. Asymmetry alterations will allow to measure wide range of Ammonia concentrations (lower asymmetry for low concentration, higher asymmetry for larger concentrations). Different claddings (30) allow to selectively measure concentrations of other gases that could be present in the environment.

The method for manufacturing of the sensor chip (2) for the selective gas sensor is also claimed. The method comprising the following steps: (i) providing at least one substrate (22), comprising of a glass, a quartz, or a polymer film; (ii) depositing on the substrate (22) at least one photoresist layer of epoxy-based negative photoresist; (iii) creation at least two optically connected in parallel Mach-Zehnder interferometer structures (23) in the polymer layer; (iv) deposition of polymer claddings (30) on each Mach-Zehnder interferometer structure (23); (v) thermal treatment of the polymer claddings (30) selecting thermal treatment time and temperature to create the desired pores size of each polymer claddings (30) to obtain different pores size of the polymer claddings (31, 32, 33, 34) on respective Mach-Zehnder interferometer structures (23', 23", 23 "', 23ʺʺ) - Fig. 4.

The epoxy-based negative photoresist can be any epoxy-based negative photoresist, having refractive index between 1.58-1.7 at 633 nm.

According to the invention, depositing on the substrate (22) of at least one photoresist layer of epoxy-based negative photoresist can be made by spin-coating; creation of the Mach-Zehnder interferometer structures (23) in the polymer layer can be made by optical lithography; deposition of the polymer claddings (30) on the Mach-Zehnder interferometer structures (23) can be made by spray-coating.

According to one embodiment of the method, at the step (iii) at least four optically connected in parallel Mach-Zehnder interferometer structures (23', 23", 23 "', 23"") are created in the polymer layer.

In general, to get polymer cladding with desired properties, it is thermally treated at the temperature from 55 to 150°C for 30 - 400 seconds. According to invention, the connected in parallel Mach-Zehnder interferometer structures (23', 23", 23 "', 23ʺʺ), created in the polymer layer, each having claddings with different properties.

In the particular embodiment with four in parallel connected Mach-Zehnder interferometer structures (23', 23", 23 ‴, 23ʺʺ) have pores size as follows: the polymer cladding one (31) - from 0.23 nm to 0.35 nm; the polymer cladding two (32) - from 0.18 nm to 0.25 nm; the polymer cladding three (33) - from 0.13 nm to 0.2 nm; the polymer cladding four (34) - from 0.08 nm to 0.15 nm. To achieve this the thermal treatment of the polymer claddings (30) at the step (v) of the above method, is made by keeping first polymer cladding (31) at the temperature from 60 to 75°C for 60 - 300 seconds; second polymer cladding (32) at the temperature from 75 to 90°C for 60 - 300 seconds; third polymer cladding (33) at the temperature from 90 to 105°C for 60 - 300 seconds; fourth polymer cladding (34) at the temperature from 105 to 120°C for 60 - 300 seconds.

### Examples of Implementation of the Invention

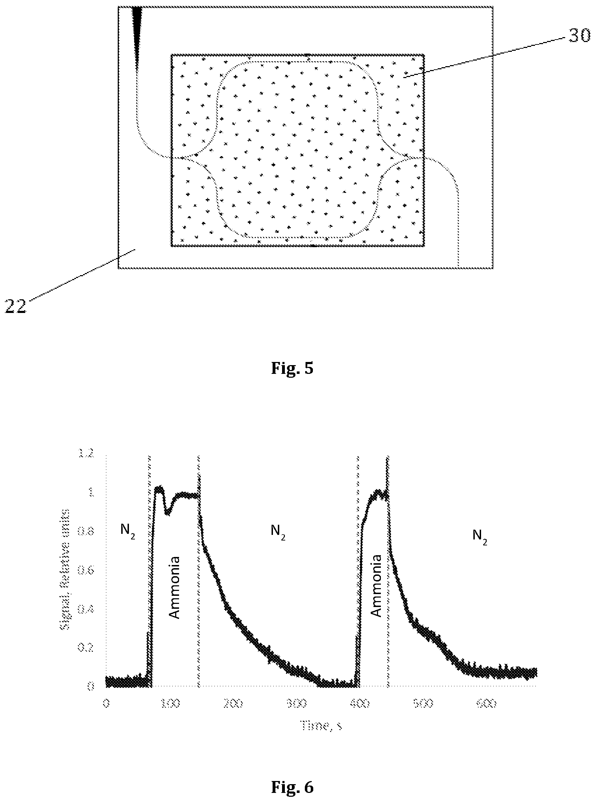

Example 1. According to one embodiment, the device comprises asymmetrical Mach-Zehnder Interferometers (23) based on SU-8 waveguides structures. The Mach-Zehnder Interferometer (23) part of the structure is coated with PMMA (Fig. 5). Firstly, a SU-8 layer of thickness 1.2 um is deposited on the substrate using the spin-coating technique. The device is then structured using a direct write lithography procedure with illumination wavelength of 365 nm. Waveguide input consists of a taper structure with the input of 10 µm that converts to a 1 µm wide waveguide over 5 mm length. The rest of the waveguide structure consists of a 1 µm wide waveguide. The asymmetrical Mach-Zehnder Interferometer (23) has one arm with a length of 10 mm while the other arm has a length of 10.125 mm. These structures are coated with PMMA using the spray-coating method. To do this PMMA is firstly dissolved in anisole and then sprayed through a mask on top of the structures to produce a 2 µm thick layer. To test device sensitivity, the light irradiation with a wavelength of 632.8 nm is coupled into the chip with the lens with a magnification of 20x, and output light is collected also with lens with a magnification of 20x. The sensor is periodically exposed to 50 ppm ammonia gas in nitrogen. Examples of experimental data are shown in Fig. 6.

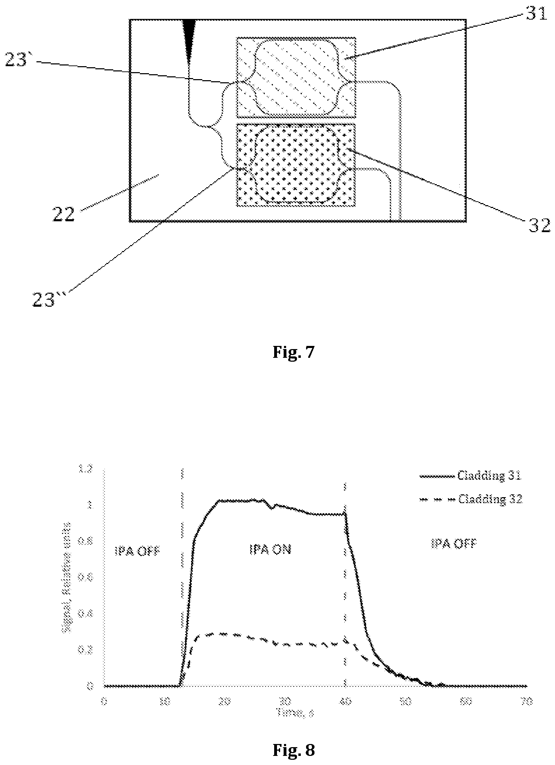

Example 2. According to another embodiment, the device comprises two asymmetrical Mach-Zehnder interferometers (23', 23") based on SU-8 waveguides structures (Fig. 7). Both of the Mach-Zehnder interferometer (23', 23") part of the structure is coated with PMMA. The device is then structured using a direct write lithography procedure with illumination wavelength of 365 nm. Waveguide input comprises a taper structure with the input of 10 µm that converts to a 1 µm wide waveguide over 5 mm length. The rest of the waveguide structure comprises a 1 µm wide waveguide. Both asymmetrical Mach-Zehnder interferometers (23', 23") have one arm with a length of 10 mm while the other arm has a length of 18 mm. These structures are coated with PMMA using the spray-coating method. After cladding deposition on first Mach-Zehnder interferometer (23'), the cladding (31) is baked at 120 °C for 5 min. After cladding deposition on the second Mach-Zehnder interferometer (23"), the cladding (32) is baked at 60 °C for 5 min. Due to the time and temperature difference in the baking procedures of each cladding (31, 32), the pore size will be different. This will strongly influence sensitivity to larger molecules while having minimal impact to detection of smaller molecules. To test device sensitivity, the light irradiation with a wavelength of 632.8 nm is coupled into the chip with the lens with a magnification of 20x, and output light is collected also with lens with a magnification of 20x. The sensor was periodically exposed to Isopropanol (IPA) vapours. Comparison of both sensor sensitivity to IPA is shown in Fig 8. When embodiment according to this exampled was exposed to ammonia gas, the sensors showed no sensitivity change. The tested sensitivity to water was the same for both sensors.

Main advantage of the device is its high sensitivity, fast response time, robustness and simple fabrication. Thus, the sensor according to the present invention can be effectively used for ammonia detection. This is especially important for such areas as animal farms and cooling systems that use ammonia.

### Sources of information

1. Liu, X. et al. Sensors 12, 9635-9665 (2012).
2. Bamiedakis, N. et al. J. Light. Technol. 31, 1628-1635 (2013).
3. WO 2021/152345 A1 ;
4. Ali, A. R. et al. Chemosensors 5, 19 (2017).
5. Foreman, M. R. et al. Adv. Opt. Photonics 7, 168 (2015).
6. Hugon, O. et al. Sensors Actuators B Chem. 51, 316-320 (1998).
7. Sturaro, M. et al. Proceedings 1, 319 (2017).
8. Qin, J. et al. J. Phys. Chem. C 121, 24740-24744 (2017).
9. St-Gelais, R. et al. Sensors Actuators B Chem. 182, 45-52 (2013).
10. Gouvêa, P. M. P. et al. 96343D (2015).
11. GazDetect. https://www.gazdetect.com/download/pdf-anglais-infos-dg/EN-CSC300-Web.pdf.
12. Aeroqual. https://www.aeroqual.com/voc-sensors-monitors.
13. Evikon. https://www.evikon.eu/en/evikon-mci-m-1/solvent-vapors-detector-transmitter-e2608-voc-p- 199.
14. Ion Science. https://www.ionscience.com/products/tiger-handheld-voc-detector/?gclid=CjwKCAiA9JbwBRAAEiwAnWa4Q5OXzBfxAL0M0w6Ee0c022ja DoQoiKacIOt4qePfFRkI9eGRLJK-YxoCEKsQAvD BwE.
15. US 5262842 A.
16. WO 2021/152345 A1.
17. Chalyan T. et al. : Asymmetric Mach-Zehnder Interferometer Based Biosensors for Aflatoxin M1 Detection. Biosensors, vol. 6, no. 1. 06.01.2016, DOI: 10.3390/bios6010001.

## Claims

1. A selective gas sensor, comprising a light source (1), a sensor chip (2) and a light detector (3); the sensor chip (2) having an optical input (20) and an optical output (21), where the light source (1) is optically connected with the optical input (20) of the sensor chip (2); the optical output (21) of the sensor chip (2) is optically connected with the optical input of the light detector (3) with ability to guide a light from the light source (1) output, through the sensor chip (2), to the optical input of the light detector (3); wherein the sensor chip (2) comprises a substrate (22), an asymmetric Mach-Zehnder interferometer (23), having an input (24) and an output (25); and a cladding (30), **characterized in that** the asymmetric Mach-Zehnder interferometer (23) comprises multiple asymmetrical Mach-Zehnder interferometer structures (23', 23", 23 ‴, 23ʺʺ) optically connected in parallel, each having different pores size of the polymer cladding (31, 32, 33, 34) that covers both the reference arm and the measurement arm of each respective Mach-Zehnder interferometer, and has multiple outputs that correspond to each of the Mach-Zehnder interferometer structures (23', 23", 23 ‴, 23ʺʺ) outputs; wherein the pore sizes of each polymer cladding (31, 32, 33, 34) differ by 0.02 nm to 0.1 nm.

2. The selective gas sensor according to claim 1, wherein the substrate (22) comprises a glass, a quartz, or a polymer film.

3. The selective gas sensor according to any one of the preceding claims, wherein the light source (1), the sensor chip (2), and the light detector (3) are optically connected with an optical fiber (40).

4. The selective gas sensor according to any one of the preceding claims, wherein the polymer cladding one (31) has pores size from 0.23 nm to 0.35 nm; the polymer cladding two (32) has pores size from 0.18 nm to 0.25 nm; the polymer cladding three (33) has pores size from 0.13 nm to 0.2 nm; the polymer cladding four (34) has pores size from 0.08 nm to 0.15 nm.

5. A method for manufacturing of the sensor chip (2) for the selective gas sensor according to any of the preceding claims, comprising the following steps:
(i) providing at least one substrate (22), comprising of a glass, a quartz, or a polymer film,
(ii) depositing on the substrate (22) at least one photoresist layer of epoxy-based negative photoresist,
(iii) creation at least two optically connected in parallel Mach-Zehnder interferometer structures (23) in the polymer layer,
(iv) deposition of polymer claddings (30) on each Mach-Zehnder interferometer structure (23),
(v) thermal treatment of the polymer claddings (30) selecting thermal treatment time and temperature to create the desired pores size of each polymer claddings (30) to obtain different pores size of the polymer claddings (31, 32, 33, 34) on respective Mach-Zehnder interferometer structures (23', 23", 23 ‴, 23ʺʺ).

6. The method according to claim 5, wherein depositing on the substrate (22) of at least one photoresist layer of epoxy-based negative photoresist is made by spin-coating.

7. The method according to claim 5, wherein creation of the Mach-Zehnder interferometer structures (23) in the polymer layer is made by optical lithography.

8. The method according to claim 5, wherein deposition of the polymer claddings (30) on the Mach-Zehnder interferometer structures (23) is made by spray-coating.

9. The method according to claim 5, wherein at the step (iii) at least four optically connected in parallel Mach-Zehnder interferometer structures (23', 23", 23 ‴, 23ʺʺ) are created in the polymer layer.

10. The method according to claim 5, wherein thermal treatment of the polymer claddings (30) at the step (v) is made by keeping first polymer cladding (31) at the temperature from 60 to 75°C for 60 - 300 seconds; second polymer cladding (32) at the temperature from 75 to 90°C for 60 - 300 seconds; third polymer cladding (33) at the temperature from 90 to 105°C for 60 - 300 seconds; fourth polymer cladding (34) at the temperature from 105 to 120°C for 60 - 300 seconds.

11. Use of the sensor chip (2), manufactured according to any one of claims 5-10 in the selective gas sensor according to any one of claims 1-4.

## Patentansprüche

1. Ein selektiver Gassensor, bestehend aus einer Lichtquelle (1), einem Sensorchip (2) und einem Lichtdetektor (3). Der Sensorchip (2) weist einen optischen Eingang (20) und einen optischen Ausgang (21) auf, wobei die Lichtquelle (1) optisch mit dem optischen Eingang (20) des Sensorchips (2) verbunden ist. Der optische Ausgang (21) des Sensorchips (2) ist dabei optisch mit dem optischen Eingang des Lichtdetektors (3) verbunden, und Licht kann vom Ausgang der Lichtquelle (1) durch den Sensorchip (2) zum optischen Eingang des Lichtdetektors (3) geleitet werden. Der Sensorchip (2) beinhaltet ferner ein Substrat (22), ein asymmetrisches Mach-Zehnder-Interferometer (23) mit einem Eingang (24) und einem Ausgang (25) sowie weist eine Ummantelung (30) auf. Er kennzeichnet sich dadurch, dass das asymmetrische Mach-Zehnder-Interferometer (23) mehrere asymmetrische Mach-Zehnder-Interferometerstrukturen (23`, 23``, 23 ```, 23````) enthält, die optisch parallel geschaltet sind, wobei jede unterschiedliche Porengrößen der Polymerummantelung (31, 32, 33, 34) aufweist, die sowohl den Referenzarm als auch den Messarm des jeweiligen Mach-Zehnder-Interferometers bedeckt, und mehrere Ausgänge hat, die jeweils einer der Mach-Zehnder-Interferometerstrukturen (23`, 23``, 23 ```, 23````) entsprechen. Die Porengrößen der einzelnen Polymerummantelungen (31, 32, 33, 34) unterscheiden sich dabei voneinander um jeweils 0,02 nm bis 0,1 nm.

2. Selektiver Gassensor gemäß Patentanspruch 1, wobei das Substrat (22) aus Glas, Quarz oder einer Polymerfolie besteht.

3. Selektiver Gassensor gemäß einem der vorstehenden Patentansprüche, bei dem die Lichtquelle (1), der Sensorchip (2) und der Lichtdetektor (3) über eine Lichtleitfaser (40) optisch miteinander verbunden sind.

4. Selektiver Gassensor gemäß einem der vorstehenden Patentansprüche, wobei die erste Polymerummantelung (31) Porengrößen von 0,23 nm bis 0,35 nm, die zweite Polymerummantelung (32) eine Porengröße von 0,18 nm bis 0,25 nm, die dritte Polymerummantelung (33) eine Porengröße von 0,13 nm bis 0,2 nm und die vierte Polymerummantelung (34) eine Porengröße von 0,08 nm bis 0,15 nm aufweisen.

5. Verfahren zur Herstellung des Sensorchips (2) für den selektiven Gassensor gemäß einem der vorstehenden Patentansprüche, bestehend aus den folgenden Schritten:
(i) Bereitstellen mindestens eines Substrats (22), das aus Glas, Quarz oder einer Polymerfolie besteht;
(ii) Auftragen mindestens einer Fotolackschicht aus einem Negativfotolack auf Epoxidbasis auf das Substrat (22);
(iii) Erzeugen mindestens zweier optisch parallel geschalteter Mach-Zehnder-Interferometerstrukturen (23) in der Polymerschicht;
(iv) Auftragen von Polymerummantelungen (30) auf jede Mach-Zehnder-Interferometerstruktur (23);
(v) Thermische Behandlung der Polymerummantelungen (30). Die Dauer und Temperatur der thermischen Behandlung werden dabei so gewählt, dass die gewünschte Porengröße jeder Polymerummantelung erzeugt wird, um unterschiedliche Porengrößen der Polymerummantelungen (31, 32, 33, 34) auf den jeweiligen Mach-Zehnder-Interferometerstrukturen (23`, 23``, 23```, 23````) zu erhalten.

6. Verfahren gemäß Patentanspruch 5, wobei das Auftragen mindestens einer Fotolackschicht aus einem Negativfotolack auf Epoxidbasis auf das Substrat (22) durch Spin-Coating erfolgt.

7. Verfahren gemäß Patentanspruch 5, wobei die Erzeugung der Mach-Zehnder-Interferometerstrukturen (23) in der Polymerschicht mittels optischer Lithografie erfolgt.

8. Verfahren gemäß Patentanspruch 5, wobei das Auftragen der Polymerummantelungen (30) auf die Mach-Zehnder-Interferometerstrukturen (23) durch Sprühbeschichtung erfolgt.

9. Verfahren gemäß Patentanspruch 5, wobei im Schritt (iii) mindestens vier optisch parallel geschaltete Mach-Zehnder-Interferometerstrukturen (23`, 23``, 23```, 23````) in der Polymerschicht erzeugt werden.

10. Verfahren gemäß Patentanspruch 5, wobei die thermische Behandlung der Polymerummantelungen (30) im Schritt (v) dadurch erfolgt, dass die erste Polymerummantelung (31) 60 bis 300 Sekunden lang einer Temperatur von 60 bis 75 °C, die zweite Polymerummantelung (32) 60 bis 300 Sekunden lang einer Temperatur von 75 bis 90 °C, die dritte Polymerummantelung (33) 60 bis 300 Sekunden lang einer Temperatur von 90 bis 105 °C und die vierte Polymerummantelung (34) 60 bis 300 Sekunden einer Temperatur von 105 bis 120 °C ausgesetzt werden.

11. Verwendung des gemäß einem der Patentansprüche 5 bis 10 hergestellten Sensorchips (2) in einem selektiven Gassensor gemäß den Einsatzmöglichkeiten aus den Patentansprüchen 1 bis 4.

## Revendications

1. Capteur de gaz sélectif, comprenant une source de lumière (1), une puce de capteur (2) et un détecteur de lumière (3) ; la puce de capteur (2) ayant une entrée optique (20) et une sortie optique (21), où la source de lumière (1) est connectée optiquement à l'entrée optique (20) de la puce de capteur (2) ; la sortie optique (21) de la puce de capteur (2) est connectée optiquement à l'entrée optique du détecteur de lumière (3) avec la capacité de guider une lumière provenant de la sortie de la source de lumière (1), à travers la puce de capteur (2), jusqu'à l'entrée optique du détecteur de lumière (3) ; dans lequel la puce de capteur (2) comprend un substrat (22), un interféromètre de Mach-Zehnder asymétrique (23), ayant une entrée (24) et une sortie (25) ; et un revêtement (30), **caractérisé en ce que** l'interféromètre de Mach-Zehnder asymétrique (23) comprend multiples structures d'interféromètre de Mach-Zehnder asymétrique (23`, 23``, 23 ```, 23````) connectées optiquement en parallèle, ayant chacune une taille de pores différente du gainage polymère (31, 32, 33, 34) qui couvre à la fois le bras de référence et le bras de mesure de chaque interféromètre de Mach-Zehnder respectif, et a de multiples sorties qui correspondent à chacune des sorties des structures d'interféromètre de Mach-Zehnder (23`, 23``, 23 ```, 23````) ; dans lequel les tailles de pores de chaque gainage polymère (31, 32, 33, 34) diffèrent de 0,02 nm à 0,1 nm.

2. Capteur de gaz sélectif selon la revendication 1, dans lequel le substrat (22) comprend un verre, un quartz ou un film polymère.

3. Capteur de gaz sélectif selon l'une quelconque des revendications précédentes, dans lequel la source de lumière (1), la puce de capteur (2) et le détecteur de lumière (3) sont connectés optiquement à une fibre optique (40).

4. Capteur de gaz sélectif selon l'une quelconque des revendications précédentes, dans lequel le gainage polymère numéro un (31) a des tailles de pores allant de 0,23 nm à 0,35 nm ; le gainage polymère numéro deux (32) a des tailles de pores allant de 0,18 nm à 0,25 nm ; le gainage polymère numéro trois (33) a des tailles de pores allant de 0,13 nm à 0,2 nm ; le gainage polymère numéro quatre (34) a des tailles de pores allant de 0,08 nm à 0,15 nm.

5. Procédé destiné à la fabrication de la puce de capteur (2) pour le capteur de gaz sélectif selon l'une quelconque des revendications précédentes, comprenant les étapes suivantes :
(i) la fourniture d'au moins un substrat (22), constitué d'un verre, d'un quartz ou d'un film polymère,
(ii) le dépôt sur le substrat (22) d'au moins une couche de photorésine d'une photorésine négative à base d'époxy,
(iii) la création d'au moins deux structures d'interféromètre de Mach-Zehnder (23) connectées optiquement en parallèle dans la couche polymère,
(iv) le dépôt de gainages polymères (30) sur chaque structure d'interféromètre de Mach-Zehnder (23),
(v) le traitement thermique des gainages polymères (30) en sélectionnant le temps et la température de traitement thermique pour créer la taille de pores souhaitée de chaque gainage polymère (30) pour obtenir des tailles de pores différentes des gainages polymères (31, 32, 33, 34) sur les structures d'interféromètre de Mach-Zehnder (23`, 23``, 23 ```, 23````) respectives.

6. Procédé selon la revendication 5, dans lequel le dépôt sur le substrat (22) d'au moins une couche de photorésine d'une photorésine négative à base d'époxy est réalisé par revêtement à la tournette.

7. Procédé selon la revendication 5, dans lequel la création des structures d'interféromètre de Mach-Zehnder (23) dans la couche polymère est réalisée par lithographie optique.

8. Procédé selon la revendication 5, dans lequel le dépôt des gainages polymères (30) sur les structures d'interféromètre de Mach-Zehnder (23) est réalisé par revêtement par pulvérisation.

9. Procédé selon la revendication 5, dans lequel à l'étape (iii) au moins quatre structures d'interféromètre de Mach-Zehnder (23`, 23``, 23 ```, 23````) connectées optiquement en parallèle sont créées dans la couche polymère.

10. Procédé selon la revendication 5, dans lequel le traitement thermique des gainages polymères (30) à l'étape (v) est réalisé en gardant le premier gainage polymère (31) à la température allant de 60 à 75 °C pendant 60 à 300 secondes ; le deuxième gainage polymère (32) à la température allant de 75 à 90 °C pendant 60 à 300 secondes ; le troisième gainage polymère (33) à la température allant de 90 à 105 °C pendant 60 à 300 secondes ; le quatrième gainage polymère (34) à la température allant de 105 à 120 °C pendant 60 à 300 secondes.

11. Utilisation de la puce de capteur (2), fabriquée selon l'une quelconque des revendications 5 à 10 dans le capteur de gaz sélectif selon l'une quelconque des revendications 1 à 4.
